# EUROPEAN PATENT APPLICATION

(11) **EP 4 741 206 A1**
(43) Date of publication of application: **13.05.2026**
(21) Application number: 25213623.9
(22) Date of filing: 05.11.2025
(51) Int. Cl.: B60K 35/81

(54) **SYSTEM AND METHOD FOR SYNCHRONIZATION OF PHYSICAL AND DIGITAL ELEMENTS OF AN ANALOG/DIGITAL INSTRUMENT OF A VEHICLE**

(30) Priority: 06.11.2024 IT 202400024927
(71) Applicant: FERRARI S.p.A., 41100 Modena (IT)
(72) Inventor: MASSIMINO, Paolo, 41100 Modena (IT); ASCRIZZI, Alfredo, 41100 MODENA (IT); DI STEFANO, Andrea, 41100 MODENA (IT); DI ZANNI, Gianluigi, 41100 MODENA (IT); NOVELLI, Lucia, 41100 MODENA (IT)
(74) Representative: Studio Torta S.p.A.

(57) **Abstract**

A synchronization system (30) for synchronization of at least one physical element (12) and at least one digital element (13) of an analog/digital instrument (30) of a vehicle (1) is described, which envisages: a first driving sub-system (32), for driving the digital element (13) and including a first digital processing unit (32a) operatively coupled to the digital element (13); a second driving sub-system (34), for driving the physical element (12) and including a second digital processing unit (34a) operatively coupled to the physical element (12). The first and second digital processing units (32a, 34a) of the first and second driving sub-systems (32, 34) implement a synchronization algorithm to determine a synchronism between an operation of the first driving sub-system (32) and a corresponding operation of the second driving sub-system (34), said synchronization algorithm including operations that are independent of the use of a common reference clock and are based on a set of predefined signals exchanged between the first and second digital processing units (32a, 34a).

## Description

### CROSS-REFERENCE TO RELATED APPLICATIONS

This patent application claims priority from Italian patent application no. 102024000024927 filed on November 6, 2024, the entire disclosure of which is incorporated herein by reference.

### TECHNICAL FIELD

The present solution relates to a system and method for synchronization of mechanical and digital elements, in particular for an analog and digital instrument of a vehicle.

### PRIOR ART

As is known, technological development has led in various areas to the creation of so-called "phygital" systems (a term obtained as a blending of "physical" and "digital"), which combine digital and physical elements within a single instrument or device.

In particular, in order to improve the so-called "user experience" and the immediacy of use of technological contents, analog/digital instruments and user interfaces have been created, which comprise, in addition to a digital display element, one or more mechanical or physical elements coupled to, typically overlapping, the same display. In this type of instruments or interfaces, digital and physical elements cooperate to contribute to a more immediate and usable provision of contents for the user.

For example, EP 4 365 002 A2 describes a digital and analog instrument for a vehicle comprising a digital display, a pointer (a needle, a pointing device or other similar physical element), which can be arranged above the digital display and is mounted movably so as to move over the digital display, and an actuator device configured to move the pointer.

For example, this digital and analog instrument can be used in a dashboard or instrument panel of the vehicle, for a more immediate indication of the value of physical quantities that change over time (for example, speed or engine revolutions), suitably combining the graphic display and a movement of the physical pointer in combination with the same graphic display.

In these instruments, and in general in the aforesaid "phygital" systems, the integration between physical and digital elements requires a strict and controlled synchronization between the same physical and digital elements to obtain a content consistent with the evolving state of the system. For example, a graphical representation on the display of an increment on a graduated scale has to correspond to a synchronized movement of the pointer (in terms of its displacement and speed of displacement).

In particular, given that the digital and physical elements are generally driven by different portions of the system or sub-systems, for example including respective and distinct digital processing units, appropriate synchronization between the parts involved has to be provided.

This synchronization can be implemented by means of a common reference clock (so-called "master clock"); however, this solution involves a rather high implementation cost and can sometimes be difficult or even impossible to implement, due to limitations and costs of the hardware or architecture available.

### AIM OF THE INVENTION

Aim of this solution is generally to provide a system for implementing the aforesaid synchronization between mechanical and digital elements, which can overcome or in any case limit the problems previously highlighted.

In view of the above stated aim, according to the present solution a system and a method as defined in the appended claims are provided.

### BRIEF DESCRIPTION OF THE DRAWINGS

The present invention will now be described with reference to the attached drawings, which show non-limiting embodiment thereof, wherein:
- Figure 1 schematically shows a portion of a motor vehicle provided with a digital and analog instrument and a synchronization system for synchronization of mechanical and digital elements in the same digital and analog instrument;
- Figures 2A and 2B are perspective views, with parts removed for clarity, of a possible implementation of the digital and analog instrument of Figure 1; and
- Figure 3 is a block diagram of the synchronization system, according to an embodiment of the present solution.

### DETAILED DESCRIPTION OF FORMS OF IMPLEMENTATION

As will be described below, one aspect of the present solution generally envisages implementing a synchronization system for synchronization of mechanical and digital elements, in particular for an analog and digital instrument of a vehicle, which does not require the use of a common time reference (i.e. a common reference clock for the respective sub-systems driving the mechanical and digital elements).

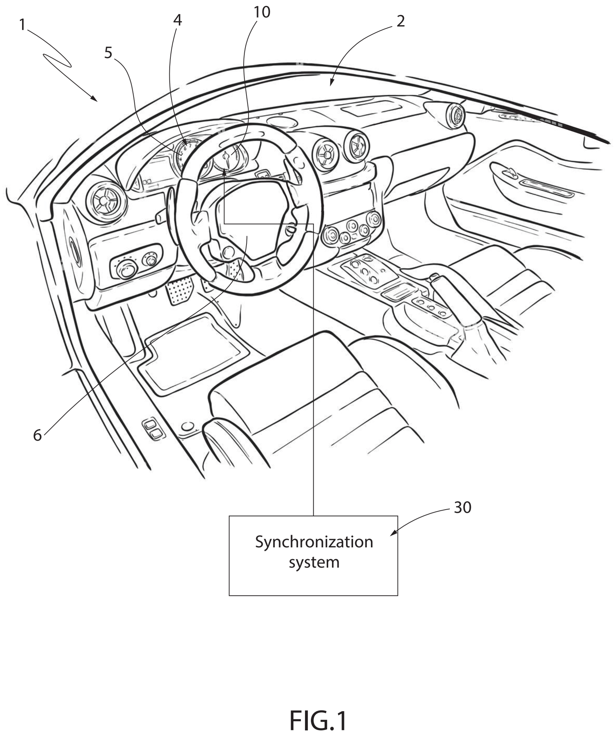

Figure 1 shows a portion of a vehicle, in particular a motor vehicle 1 (which can indifferently be of a traditional or thermal type, or of a hybrid or electric type), having a passenger compartment 2 and a dashboard 4, which constitutes a front wall of the passenger compartment 2, positioned below the windscreen. The dashboard 4 carries an instrument panel 5, which is arranged in front of a driver of the motor vehicle 1, usually immediately behind a steering wheel 6 of the same motor vehicle 1.

In particular, the motor vehicle 1 comprises, for example forming part of the aforesaid instrument panel 5, at least one analog/digital instrument 10, i.e. being partly analog and partly digital, including at least one digital element, such as a display screen, and at least one mechanical or physical element, such as a pointer, a needle or the like, overlapping the display screen, during operation.

This analog/digital instrument 10 can alternatively be arranged at the instrument panel of the motor vehicle 1, in general being part of an infotainment system of the same motor vehicle 1.

In a possible implementation, the analog/digital instrument 10 may implement a speedometer and/or tachometer of the motor vehicle 1, generating for example a dynamic representation of a graduated scale on the display screen, with the aforesaid pointer that is driven so as to move appropriately with respect to this graduated scale to provide a driver of the motor vehicle 1 with an immediate and easy-to-use representation, even in more demanding driving conditions (e.g. driving on a track).

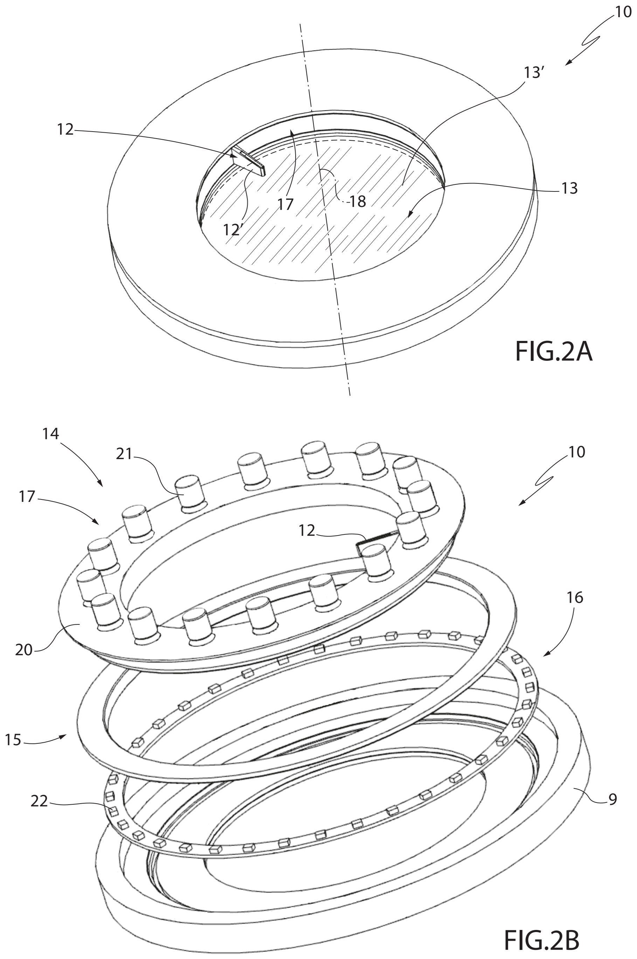

Figures 2A and 2B show, by way of example only, a possible implementation of the analog/digital instrument 10, made in accordance with what described in detail in the Italian patent application 102024000014698 filed on 26/06/2024 by the present Applicant.

As indicated above, such analog/digital instrument 10 combines the physical presence of at least one physical or mechanical element 12, in particular a pointer 12' (or needle or similar pointing element) to the digital nature of a digital element 13, in particular a display screen or display 13', schematically shown in Figure 2A and not shown for clarity in Figure 2B.

In other words, the analog/digital instrument 10 comprises the display screen 13' (of the digital type, for example made with LED technology or OLED technology) and the pointer 12' (of the mechanical or physical type) which is arranged in front of (above) the display screen 13' to overlap (when required) the same display screen 13'.

In the embodiment shown in Figures 2A and 2B, the display screen 13' has a circular (round) shape, but it is clear that it may have a different shape such as, for example, a rectangular or square shape.

The pointer 12' is mounted movably, so as to move (when required) in front of (above) the display screen 13', for example to indicate information displayed on the same display screen 13'. In particular, in the embodiment shown, the pointer 12' has a visible part (i.e. a part that can overlap the display screen 13') having a peripheral arrangement with respect to the display screen 13', i.e. extending from the edge towards the centre of the same display screen 13'.

The analog/digital instrument 10 further comprises an actuator device 14 (shown in Figure 2B) which is configured to move the pointer 12' relative to the display screen 13' and directly supports the pointer 12'.

According to what is shown in this Figure 2B, the actuator device 14 may for example comprise an electric motor 15 of the rotating type provided with a stator 16 and a rotor 17 rotatably mounted around a central rotation axis 18 (shown in Figure 2A) perpendicular to the plane of the display screen 13'.

The rotor 17 of the electric motor 15 has a centrally perforated ring shape and is arranged in front of (above) the display screen 13' in such a way that the same display screen 13' is visible via a central through hole of the rotor 17. In addition, the pointer 12' is integral with the rotor 17 and protrudes in a cantilevered manner inward from the rotor 17, to be arranged in front of (above) the display screen 13'.

The rotation of the rotor 17 about the rotation axis 18 also determines the rotation of the pointer 12' about the rotation axis 18 and thus determines the rotational movement of the pointer 12' in front of (above) the display screen 13'.

According to what is shown in Figure 2B, the rotor 17 has permanent magnets and comprises a ferromagnetic core 20 with a centrally perforated annular shape and a plurality of permanent magnets 21 integral with the ferromagnetic core 20.

The stator 16 comprises a stator winding 22 configured to generate a rotating magnetic field when supplied with an electric current. In particular, the stator 16 comprises a printed circuit in which flat coils forming part of the stator winding 22 are made.

It should be noted in any case that the implementation of the analog/digital instrument 10 may differ from what is shown with reference to Figures 2A and 2B.

As schematically shown in the aforesaid Figure 1, the motor vehicle 1 further comprises a synchronization system 30, operatively coupled to the analog/digital instrument 10 and configured so as to synchronize the operation of the corresponding physical and digital elements 12, 13.

In particular, the synchronization system 30 allows to adapt the movements, for example in terms of position, speed and acceleration, of the physical element 12 (in particular of the pointer 12') with respect to corresponding "movements" associated with the digital element 13 (in particular, in terms of variations over time of a digital content shown on the display 13').

For example, as also noted above, the synchronization system 30 may be configured to synchronize the movement of the pointer 12' to a graphical representation on the display 13' of an increment on a graduated scale (with the pointer 12' pointing towards a final portion of that graduated scale).

As will be described in detail, according to one aspect of the present solution, the synchronization system 30 is configured to estimate an intrinsic latency and a de-synchronization time between the sub-systems driving the physical and digital elements 12, 13. In particular, information on latency estimation is continuously updated over time to cope with de-synchronization phenomena (such as "jitter" and "skew") that cannot be predicted between the aforesaid sub-systems.

The estimated latency is then used to adapt the driving by the aforesaid sub-systems and the corresponding movement of the physical and digital elements, accordingly.

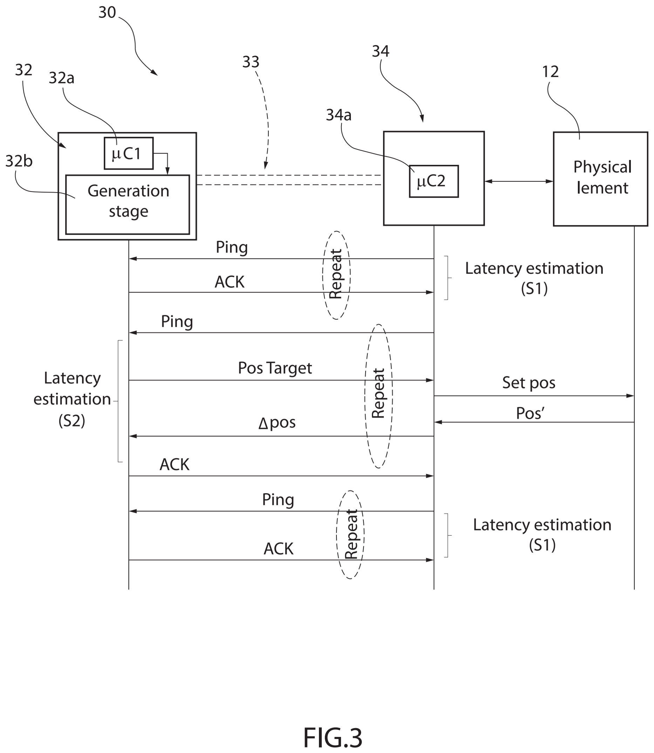

In detail, and with reference now to Figure 3, the synchronization system 30 comprises a first driving sub-system 32, configured to drive (providing suitable control signals) the digital element 13 of the analog/digital instrument 10, for example the aforesaid display screen 13'.

In particular, this first driving sub-system 32 comprises a first digital processing unit 32a (a microprocessor, microcontroller or the like, in the example indicated with µC1) and a digital content generation stage 32b, controlled by the first digital processing unit 32a and configured to determine the generation of appropriate digital content representations on the display screen 13' (not shown here).

In a possible implementation, the first digital processing unit 32a may coincide with, or be part of, a control and management unit of the infotainment system of the motor vehicle 1, configured to control, in a known manner, the generation of digital audio-video content (information and entertainment) and also the activation, regulation or monitoring of different functions of the motor vehicle 1 (for example the management of air conditioning or the control of data associated with the operation of the motor vehicle 1).

The aforesaid synchronization system 30 also comprises a second driving sub-system 34, configured to drive (by providing control and driving signals) the analog part of the analog/digital instrument 10, i.e. the physical element 12, for example the aforesaid pointer 12'.

In particular, this second driving sub-system 34 comprises a second digital processing unit 34a (a microprocessor, microcontroller or the like, in the example indicated with µC2), operatively coupled to the aforesaid physical element 12.

The synchronization system 30 further comprises a communication channel, schematically indicated with 33, which couples the first and second driving sub-systems 32, 34, in particular the corresponding first and second digital processing units 32a, 34a.

The first and second driving sub-systems 32, 34 and the corresponding first and second digital processing units 32a, 34a operate on the basis of different logics and criteria, for example being based on respective operating programs or systems. In general, therefore, the operation of the same first and second driving sub-systems 32, 34 is not synchronized and does not take place starting from a common time base.

The synchronization system 30 is thus configured to implement a synchronization algorithm between the aforesaid first and second driving sub-systems 32, 34, with the aim of determining a synchronism between the operation of the first driving sub-system 32 and the operation of the second driving sub-system 34, in particular so as to recover a latency or de-synchronization.

According to one aspect of the present solution, the synchronization algorithm includes operations that are independent of a common reference clock and are based on a predefined signal or set of signals exchanged between the parts to be synchronized via the aforesaid communication channel 33. In particular, a round-trip time of the signal (or signals) exchanged between the parts is measured continuously over time to estimate the temporal shift between the elements to be synchronized.

In detail, a first step of the synchronization algorithm, indicated with S1 in Figure 3, envisages implementing an estimation of the latency due to the communication channel 33 between the first and second driving sub-system 32, 34 (and a corresponding propagation of the electrical signals).

This latency is substantially invariable in the short term (as the communication channel 33 is not subject to rapid changes during the operation of the system) and can be performed at start-up and thereafter repeated periodically with a first, rather long, repetition interval, for example of the order of 10-15 seconds.

In particular, at least one latency estimation signal is sent by one of the two parts to be synchronized and received by the other, which confirms its reception by means of a respective confirmation signal.

In the example shown, a "ping" signal is sent from the second processing unit 34a of the second driving sub-system 34 to the first processing unit 32a of the first driving sub-system 32; and a consequent "acknowledge" signal (ACK), in response to the aforesaid "ping" signal is sent from the first processing unit 32a of the first driving sub-system 32 to the second processing unit 34a of the second driving sub-system 34.

Depending on the round trip time of the aforesaid ping and acknowledge signals, it is possible for the aforesaid first and second processing units 32a, 34a to make a first latency estimation, Δ*T*₁, which can be defined as static, as it relates to the characteristics and intrinsic variability of the communication channel 33 and which is expected to be influenced in a limited manner by rapid changes.

A second step of the synchronization algorithm, indicated with S2 in Figure 3, is instead performed during the transmission of data and/or commands between the first and second driving sub-systems 32, 34, i.e. when the analog/digital instrument 10 is driven to represent contents for the driver of the motor vehicle 1 (for example, a moving display of a graduated scale on the display 13' and a corresponding movement of the pointer 12').

In this second step, a second latency estimation is made, Δ*T*₂, which can be defined as dynamic, as it relates to the entire chain, both software and hardware, involved in the representation of contents by the aforesaid analog/digital instrument 10.

This second latency estimation Δ*T*₂ is therefore subject to more rapid variations during the operation of the system; for example, it may be significantly influenced by a workload (or computational load) of the aforesaid first and second processing units 32a, 34a (for example, of the first processing unit 32a, in the event that it is also dedicated to the general management of the infotainment system of the motor vehicle 1).

In detail, in the example shown in Figure 3, in this second step, to a "ping" signal sent by the second processing unit 34a of the second driving sub-system 34, the first processing unit 32a of the first driving sub-system 32 answers with a command signal related to an expected (or target) position of the physical element 12 (denoted with "Pos Target").

In response to this expected position command signal, the second processing unit 34a provides the physical element 12 (for example, the pointer 12') with a corresponding position setting command (indicated with "Set Pos").

Subsequently, the second processing unit 34a performs a detection (for example, by means of an appropriate sensor coupled to the physical element 12) of the current or actual position (indicated with "Pos'") actually assumed by the physical element 12 following the command provided.

The same second processing unit 34a then provides the first processing unit 32a with a current position signal, indicative of the aforesaid current position, which may differ from the expected or target position by a position deviation Δpos, which is due to the aforesaid latency between the first and second driving sub-systems 32, 34.

The first processing unit 32a then provides in response a consequent "acknowledge" signal to the second processing unit 34a.

Depending on the time in which the entire chain of communication and execution of the commands has taken place, the aforesaid first and second processing units 32a, 34a can therefore perform the aforesaid second latency estimation Δ*T*₂.

In particular, the position setting command may advantageously be generated by the second processing unit 34a as a function of the aforesaid first and second latency estimations, Δ*T*₁ *,*Δ*T*₂, for example as a function of an appropriate combination of the information associated with such first and second latency estimations, Δ*T*₁,Δ*T*₂.

As schematically indicated in Figure 3, the aforesaid first and second latency estimation steps (S1, S2) are advantageously repeated a plurality of times, continuously over time during the execution cycle and the operation of the system.

In particular, the aforesaid second step S2 may be repeated periodically with a second repetition interval, with a smaller duration with respect to the aforesaid first repetition interval, which, for example, may vary between a few tens of milliseconds and one or two seconds.

Alternatively (or in addition), the synchronization system 30 may envisage the possibility that a computational load of the first and/or second processing unit 32a, 34a is estimated and that the aforesaid second repetition interval (or the time of execution of the second latency estimation step) is determined as a function of this computational load.

In this case, the second latency estimation Δ*T*₂ is performed adaptively with respect to the computational load, since it is possible, for example, to verify more relevant variations in latency under operating conditions with a high computational load.

From what has been discussed, the advantages that the present solution allows to achieve are evident.

In any case, it is again underlined that the synchronization system and method described advantageously allow the operation of mechanical and digital elements to be synchronized, without requiring the use of a common reference clock.

This solution is particularly advantageous for use in an analog and digital instrument of a vehicle, in particular of a motor vehicle.

Finally, it is clear that what is described, can be modified and varied without departing from the scope of the present invention, as defined by the attached claims.

It should be noted in particular that the described solution can find advantageous application for the synchronization of physical and digital elements in various types of applications, even different from the application example described above in detail.

## Claims

1. A synchronization system (30) for synchronization of at least one physical element (12) and at least one digital element (13) of an analog/digital instrument (10) of a vehicle (1), comprising:
a first driving sub-system (32), configured to drive said digital element (13) and including a first digital processing unit (32a) operatively coupled to said digital element (13);
a second driving sub-system (34), configured to drive said physical element (12) and including a second digital processing unit (34a) operatively coupled to said physical element (12),
wherein said first and second digital processing units (32a, 34a) of said first and second driving sub-systems (32, 34) are configured to implement a synchronization algorithm to determine a synchronism between an operation of said first driving sub-system (32) and a corresponding operation of said second driving sub-system (34), said synchronization algorithm including operations that are independent of the use of a common reference clock and are based on a set of predefined signals exchanged between said first and second digital processing units (32a, 34a).

2. The system according to claim 1, wherein said synchronization algorithm is based on a verification, continuous over time during operation of said analog/digital instrument (10), of round-trip times of said predefined signals, designed to estimate a time shift between the operation of the first driving sub-system (32) and the operation of the second driving sub-system (34).

3. The system according to claim 1 or 2, wherein said synchronization algorithm is configured to implement a latency estimation between the operation of the first driving sub-system (32) and the operation of the second driving sub-system (34); wherein said latency estimation is used to adapt accordingly movements of said physical element (12) relative to said digital element (13).

4. The system according to claim 3, wherein said synchronization algorithm comprises a first step (S1) configured to implement a first latency estimation (Δ*T*₁) due to a communication channel (33) between the first and second driving sub-systems (32, 34), which envisages the exchange of at least one latency estimation signal between said first and second digital processing units (32a, 34a) and the evaluation of a round trip time associated with said exchange.

5. The system according to claim 4, wherein said first step is performed at start-up and thereafter is repeated periodically with a first repetition interval.

6. The system according to any one of claims 3-5, wherein said synchronization algorithm further comprises a second step (S2) configured to implement a second latency estimation (Δ*T*₂) during transmission of data and/or commands between said first and second driving sub-systems (32, 34), relating to an entire chain, software and hardware, involved in the operation of said analog/digital instrument (10) in response to said data and/or commands.

7. The system according to claim 6, wherein said second step is periodically repeated with a second repetition interval of a duration shorter than said first repetition interval.

8. The system according to claim 6 or 7, configured to estimate a computational load associated with said first and/or second processing units (32a, 34a); wherein said second repetition interval, or an instant of execution of said second step of latency estimation, is determined as a function of said computational load.

9. The system according to any one of claims 3-8, wherein said digital element (13) comprises a display screen (13'); and wherein said first driving sub-system (32) comprises a digital content generation stage (32b), controlled by said first digital processing unit (32a) and configured to generate digital content representations on said display screen (13').

10. The system according to claim 9, wherein said physical element (12) comprises a pointer (12') configured to overlap said display screen (13') and said analog/digital instrument (10) further comprising an actuator device (14) configured to move said pointer (12') relative to said display screen (13'); wherein said second digital processing unit (32b) is configured to drive said actuator device (14).

11. The system according to claim 10, wherein said second digital processing unit (32b) is configured to drive said actuator device (14) so that it moves to a position relative to the display screen (13') that is a function of a target position (Pos Target) and a position deviation (Δpos) associated with said estimated latency (ΔT).

12. An analog/digital instrument (10) of a vehicle (1), having at least one physical element (12) and at least one digital element (13), comprising the synchronization system (30) according to any one of the preceding claims.

13. The instrument according to claim 12, wherein said analog/digital instrument (10) is part of a dashboard or instrument panel (4) of the vehicle (1).

14. A vehicle (1) comprising the analog/digital instrument (10) according to claim 12 or 13.

15. A method of synchronization of at least one physical element (12) and at least one digital element (13) of an analog/digital instrument (10) of a vehicle (1), comprising:
driving said digital element (13) by means of a first driving sub-system (32), including a first digital processing unit (32a) operatively coupled to said digital element (13);
driving said physical element (12) by means of a second driving sub-system (34), including a second digital processing unit (34a) operatively coupled to said physical element (12),
further comprising implementing a synchronization algorithm to determine a synchronism between an operation of the first driving sub-system (32) and a corresponding operation of the second driving sub-system (34), said synchronization algorithm including operations that are independent of the use of a common reference clock and are based on a set of predefined signals exchanged between said first and second digital processing units (32a, 34a).
